# EUROPEAN PATENT APPLICATION

(11) **EP 1 530 061 A2**
(43) Date of publication of application: **11.05.2005**
(21) Application number: 04105503.9
(22) Date of filing: 03.11.2004
(51) Int. Cl.: G01S 13/04, G01S 7/285

(54) **Detecting device**

(30) Priority: 04.11.2003 JP 2003374653
(71) Applicant: Omron Corporation, Kyoto-shi, Kyoto 600-8530 (JP)
(72) Inventor: Mafune, Shoji OMRON Corp., 801, Minamifudodo-cho, Kyoto-shi, Kyoto 600-8530 (JP); Nishiguchi,Tadao OMRON Corp. 801, Minamifudodo-cho, Kyoto-shi, Kyoto 600-8530 (JP); Ishihara, Naoyuki OMRON Corp. 801,Minamifudodo-cho, Kyoto-shi, Kyoto 600-8530 (JP); Negoro, Kazuhiro OMRON Corp. 801, Minamifudodo-cho, Kyoto-shi, Kyoto 600-8530 (JP); Satoh, Yasuhiro OMRON Corp. 801, Minamifudodo-cho, Kyoto-shi, Kyoto 600-8530 (JP)
(74) Representative: Weihs, Bruno

(57) **Abstract**

A pulsed transmitted signal is generated, the transmitted signal is injected as electromagnetic waves, a reflected signal is received from an object on which the transmitted signal is incident, the reflected signal is sampled after a prescribed delay time from the emission of the transmitted signal, and the sampling value is compared with a threshold, to determine the presence of the object and output the determination result.

## Description

### BACKGROUND OF THE INVENTION

### Technical Field

The present invention relates to a detecting device that emits a transmitted signal by electromagnetic waves, such as electric waves or infrared rays, and detects the presence of an object on the basis of whether or not the transmitted signal is reflected on the object to give a reflected signal.

### Related Prior Art

There has hitherto been a sensor (detecting device) used in a variety of applications, the sensor emitting electromagnetic microwaves and receiving the electromagnetic microwaves (reflected signal) reflected on an object to be detected, to detect the presence or absence of the object and the distance to the object. The sensor has, for example, been used as a sensor for starting activation of an automatic door or an ATM in a bank after detecting a person standing thereat, or a device (distance detection device) for measuring a following distance from a car (cf. Japanese Laid-Open No.2001-264419).

A distance detection device is in broad use in applications of industrial equipment, such as ships, aircraft, weather eyes, and plants. A distance detection device produced by applying a pulse radar is known as a typical distance detection device. This pulse radar generates electromagnetic pulses as transmitted waves, irradiates an object with the electromagnetic pulses, receives reflected waves reflected from the object, measures a delay time from the transmission of the transmitted waves to the reception of the reflected waves, and multiplies this delay time by a sound wave velocity of the electromagnetic waves to calculate a distance (cf. Japanese Laid-Open No.2001-264419).

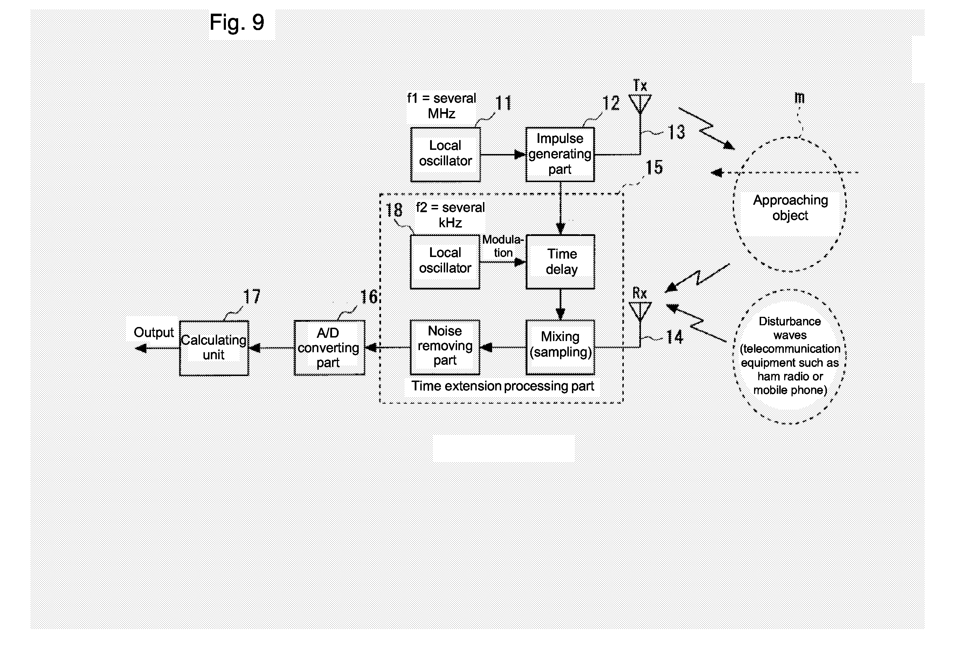

Fig. 9 is a block diagram showing a construction of a conventional pulse radar.

The pulse radar comprises: a local oscillator 11 for oscillating waves with a wavelength of several MHz; an impulse generating part 12 for generating impulse waves (transmitted signal) on the basis of the oscillation wavelength; an antenna 13 for irradiating the transmitted waves, an antenna 14 for receiving the reflected waves (reflected signal) returned after reflection of the transmitted signal on an object "m"; a time extension processing part 15 for performing a process of extending the reflected signal; an A/D converting part 16 for A/D converting the extension-processed signal; and a calculating unit 17 for calculating a delay time and an electric power intensity on the basis of the signals.

In such a construction, the conventional pulse radar measures a distance by the following steps:
(1) A space is periodically irradiated with an impulse through the antenna 13;
(2) the irradiated impulse is reflected on an object;
(3) the reflected impulse is introduced back to the radar from the antenna 14;
(4) the introduced impulse is subjected to the time extension process;
(5) the time-extension-processed waveform is digitalized by an A/D converter;
(6) a delay time of the reflected waves and an electric power intensity unit are calculated by the calculating unit to obtain the distance to the object; and
(7) the distance between the radar and the object is outputted as the calculation result.

It is to be noted that the distance between the radar and the object is proportional to the delay time of the reflected waves with respect to the irradiated waves. Although, as thus described, an impulse reflected on an object is received and the distance to the object is then detected on the basis of the received impulse, the A/D converter cannot perform processing fast enough to follow a high-speed change in waveform when calculation of a delay time and an electric power intensity of all of periodically received impulses, or other processes, is attempted, and the time extension process is therefore performed before the A/D conversion and calculating processes.

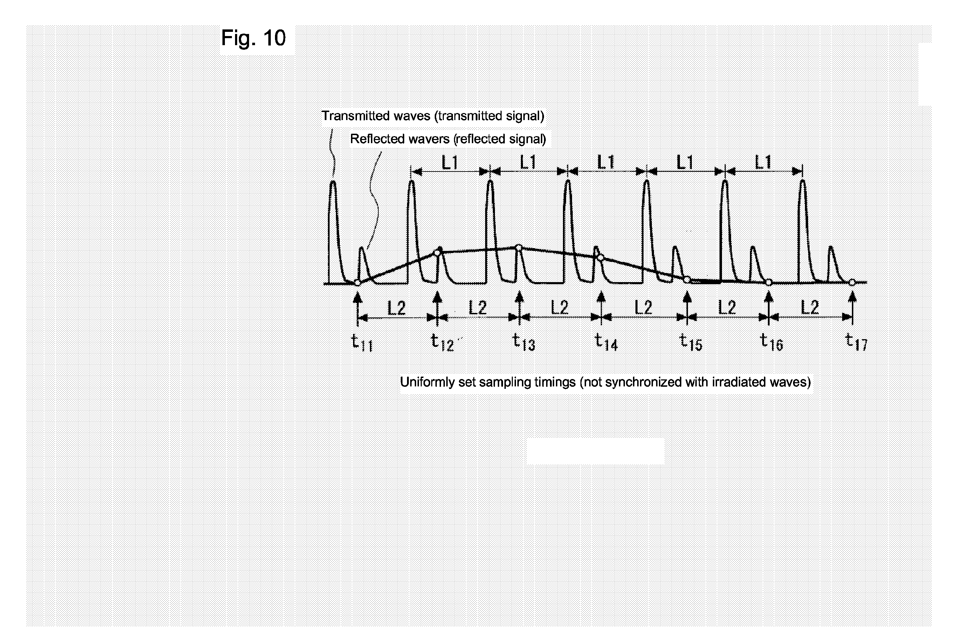

Fig. 10 shows the timing for sampling at this time. In Fig. 10, the waveform of received waves indicated by the thin line shows transmitted waves and reflected waves successively received by the antenna 14. As shown here, the transmitted waves and the reflected waves are periodically received. The time extension processing part 15 then performs sampling at timings (time t11 to t17) each delayed from the period L1 of the transmitted waves and the reflected waves, to temporally extend each reflected wave. It should be noted that the thick-line waveform in Fig. 10 indicates the time-extension-processed signal.

In this case, each distance between the timings for sampling from t11 to t17 is slightly longer than the period L1 of the transmitted waves and the reflected waves, and is uniformly set (the period L2). When attention is focused on the reflected waves, therefore, the position of the reflected waves at which a signal is sampled at the time t11 is advanced from the position of the reflected waves at which a signal is sampled at the time t12. Further, the position of the reflected waves at which a signal is sampled at the time t13 is advanced from the position of the reflected waves at which the signal is sampled at the time t12. Signals are sampled at such positions at the timing t11 to 17, and those positions are connected to extend the received signals with respect to the time axis, namely the time extension process is performed. It is to be noted that each of the circle marks in Fig. 10 indicates a position where a signal is sampled at each sampling timing.

In the receiving circuit system of the radio wave sensor in Japanese Laid-Open No.2001-264419, it was necessary to form a local oscillation circuit that generates timings for sampling received waves, in addition to a transmitted impulse generating part, in the time extension processing part. It was also necessary to process a waveform of received waves with an A/D converter to cut out effective information. Namely, local oscillation, an A/D converting part and a calculation part were required, thereby raising problems of complicating a device construction and increasing electric power consumption.

There has also been a problem of being susceptible to influence by electric waves widely used in communication.

### DISCROSURE OF THE INVENTION

Accordingly, an object of the present invention is to solve the foregoing conventional technical problems. Namely, the present invention promoted simplification of the device construction by previously specifying an object-detecting distance to hold the circuit size. This has allowed the detecting device to be used in scenes requiring reduction in size, voltage, electric power consumption and cost of a detecting device.

Further, the resistance to disturbance waves has been improved by the use of more than one sampling values.

In the present invention, the following means were employed in order to solve the forgoing problems.

A detecting device of the present invention emits a transmitted signal by pulsed electromagnetic waves, receives a reflected signal upon reflection of the transmitted signal on an object, and detects the presence of the object on the basis of the reflected signal, and the detecting device comprises: a receiving part for receiving a reflected signal from an object on which a transmitted signal is incident; a sampling part for sampling the reflected signal after a prescribed delay time from the emission of the transmitted signal; and a determining part for comparing the sampling value with a threshold to determine the presence of the object and output the determination result.

In the detecting device, the sampling part may change a delay time to perform sampling more than once per one reflected signal, and the determining part may make a determination as to the values obtained by the sampling more than once.

In the detecting device, the sampling part may change a delay time to perform sampling N times per one reflected signal, and the determining part may determine whether or not a difference between a value obtained in the Nth sampling and a value obtained in the first sampling out of N is not less than a threshold.

In the detecting device, the determining part may compare sampling values of more than one reflected signals in the case of receiving the reflected signal more than once, to obtain noise levels and inform the noise levels to the delay circuit, and the delay circuit may change the delay time on the basis of the noise levels.

In the detecting device, the determining part may make the determination as to more than one reflected signals in the case of receiving the reflected signal more than once, and may compare each value obtained by sampling at each of the delay times, to obtain each noise level, and employ and output the value obtained by sampling at the delay time with the lowest noise level.

It is to be noted that the transmitted signal in the present invention is a signal by electromagnetic waves such as electric waves, infrared rays or laser light.

According to the present invention, it is possible to provide a detecting device promoted to simplify the construction thereof by previously specifying an object-detecting distance to hold down a circuit size.

### BRIEF DESCRIPTION OF THE DRAWINGS

Fig. 1 shows a block diagram of a detecting device as Embodiment 1 according to the present invention.
Fig. 2 shows an explanatory diagram of sampling timing in Embodiment 1.
Fig. 3 shows a block diagram of a detecting device as Embodiment 2 according to the present invention.
Fig. 4 shows an explanatory diagram of sampling timing in Embodiment 2.
Fig. 5 shows a block diagram of a detecting device as a alteration example according to Embodiment 2.
Fig. 6 shows an explanatory diagram of sampling timing in the alteration example of Embodiment 2.
Fig. 7 shows a block diagram of a detecting device as Embodiment 3 according to the present invention.
Fig. 8 shows an explanatory diagram of sampling timing in Embodiment 3.
Fig. 9 shows a block diagram of a conventional detecting device.
Fig. 10 shows an explanatory diagram of sampling timing in the conventional detecting device.

### DESCRIPTION OF THE PREFERRED EMBODIMENTS

The most preferred mode of the present invention will be described below with reference to drawings. The following constructions of embodiments are examples and hence do not limit the present invention.

### Embodiment 1

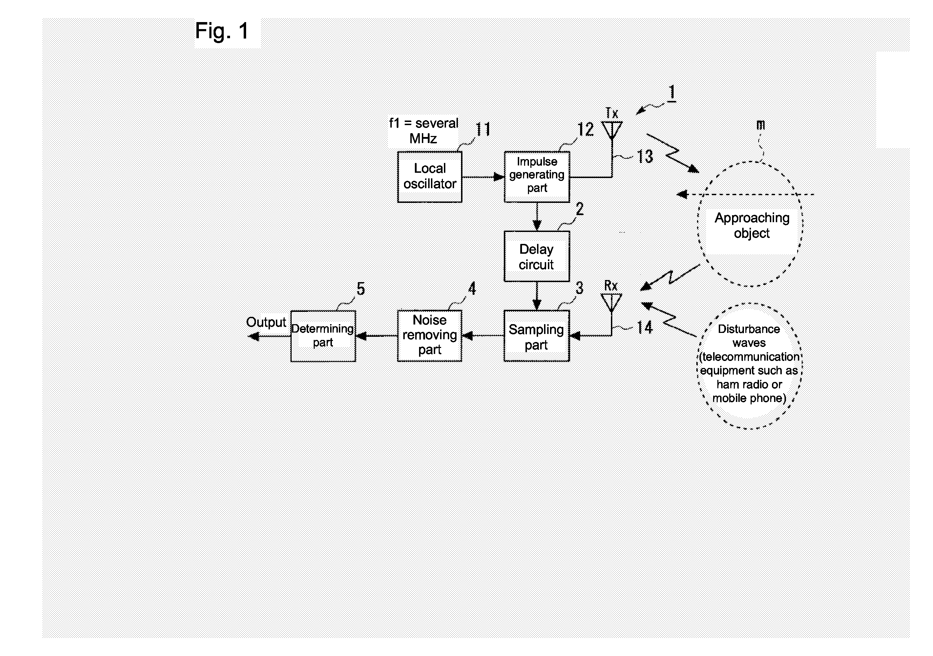

Fig. 1 is a block diagram showing a construction of a pulse sensor (detecting device) 1 according to the present invention.

The pulse sensor 1 of the present embodiment comprises a local oscillator 11, an impulse generating part 12, antennas 13 and 14, a delay circuit 2, a sampling part 3, a noise removing part 4, and a determining part 5.

The local oscillator 11 generates a clock signal of several GHz and supplies it to the impulse generating part 12.

On the basis of the clock signal supplied from the local oscillator 11, the impulse generating part 12 generates a precipitously pulsed (impulsed) transmitted signal and outputs it to the antenna 13 and to the delay circuit 2.

The antenna (corresponding to an emitting part) 13 emits the transmitted signal inputted from the impulse generating part 12 as electric waves.

The antenna (corresponding to a receiving part) 14 receives reflected waves (reflected signal) reflected on an object "m" out of the transmitted signals injected from the antenna 13, and outputs the received reflected waves as an electric signal to the sampling part 3

The delay circuit 2 gives a delay time to the signal inputted from the impulse generating part 12, to be outputted to the sampling part. This delay time may be given by using any known means. For example, the delay time may be set to a time constant of an LC circuit or an RC circuit.

The sampling part 3 samples a signal (reflected signal) from the antenna 14 after a prescribed delay time from the emission of the transmitted signal on the basis of the signal inputted from the delay circuit 2. In this manner, the sampling part 3 samples the reflected signal at a timing synchronized with the transmitted signal. It should be noted that a distance from the device 1 to a position of an object to be detected, at which the object is detectable, is previously determined, and when the object to be detected is pleasant in this detectable position, a reflected signal is received from the object, and the timing of this receipt of the reflected signal is the sampling timing. Namely, a delay time from the emission of the transmitted signal to the reception of the reflected signal in the above state is previously obtained, the delay circuit 2 is constructed so as to provide a transmitted signal with the delay time, and the sampling part 3 performs sampling at the timing of receipt of the signal provided with the delay time.

The noise removing part 4 comprises a known noise removing means such as a low-pass filter or a high-pass filter, where noise, especially higher harmonics waves, is removed from the signal inputted from the sampling part 3, and the signal is then outputted to the determining part 5.

The determining part 5 determines the presence of the object by comparing a value, obtained by sampling in the sampling part 3 through the noise removing part 4, with a threshold, and outputs the determination result. In the present embodiment, whether or not the sampling value is not less than the threshold is determined, and when the sampling value is not less than the threshold, the obtainment of the reflected signal attributed to the presence of an object is determined to output a prescribed signal (signal indicating the presence of the object). Specifically, a signal proportional to the electric power intensity (voltage change) of the reflected signal is outputted as the determination result when the sampling value is not less than the threshold, whereas the voltage change is not output when the sampling value is not more than the threshold.

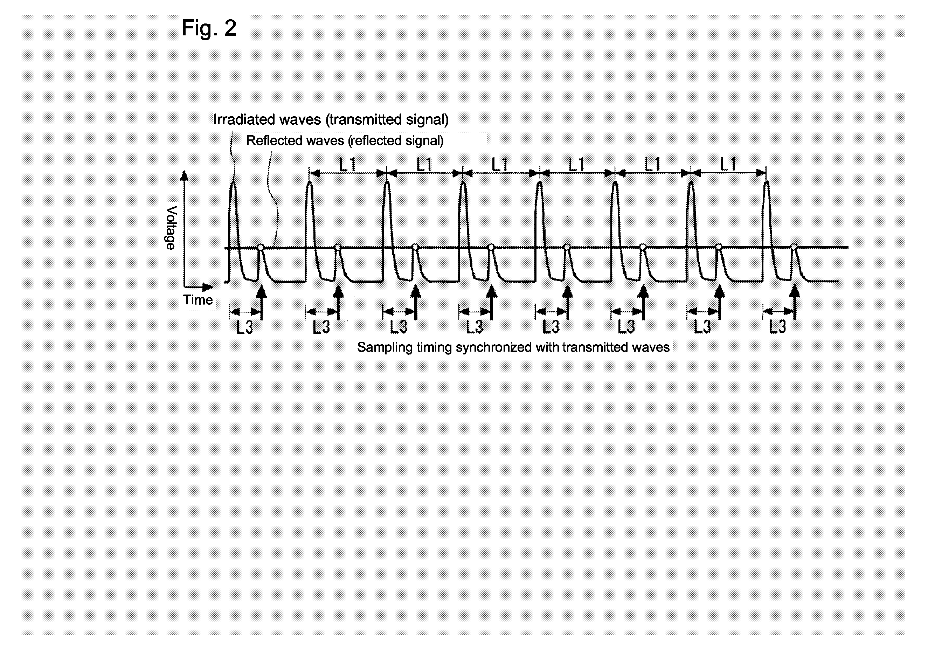

Fig. 2 is an explanatory diagram of sampling at the time of detecting an object. It is to be noted that in the figure, the thick-line arrows indicate sampling timings, while each of the circle marks indicates a position to perform sampling at each of the sampling timings.

The detecting device 1 having the above construction emits pulsed irradiated waves (transmitted signal) at a constant period L1, and samples reflected waves (reflected signal) after a previously set delay time L3. When determining the presence of the reflected waves (namely the input of a signal not less than a threshold), the determining part 5 outputs a voltage change proportional to the electric power intensity of the reflected waves so as to indicate the detection of the object to a device in a subsequent step. It is to be noted that the voltage change is not outputted in the absence of the reflected waves after the specific delay time L3.

As thus described, in the present embodiment, reflected waves are sampled at a timing synchronized with irradiated waves, to detect the presence of an object on the basis of the presence or absence of the reflected waves.

While the period L1 at which the irradiated waves are injected may be optionally set, for example, it is favorably in the range of several to dozens of microseconds. When the period L1 is over the above range and made extremely long, a total electric power of the irradiated waves decreases, thereby to make impossible to obtain a sufficient detection distance. When the period L1 is made extremely short, a demerit, such as an increase in electric power consumption or impossibility to use a general-purpose device, might occur.

Further, the object is preferably detected for example in a position to which a distance from the detecting device 1 is in the range of 1 to 100 cm, and particularly preferably in the range of 5 to 50 cm.

Such detection of the presence of the object for example allows a control of a door lock in such a manner that the detecting device 1 is installed around a door knob of a house and upon approach of (or in the presence, in a prescribed position, of) a person's hand (object), that approach is indicated to the driving unit (not shown) of the lock of the door, to release the door lock.

It is also possible to conduct a control of tap water in such a manner that the detecting device 1 is installed on a tap (not shown) equipped with an automatic faucet for controlling turning on and off tap water, and when the detecting device 1 detects approach of a person's hand (object), that approach is indicated to the automatic faucet to turn on water, and when detecting that the person' hand has moved away, the detecting device 1 indicates that the hand is not present (nothingness of the project) to the automatic faucet to turn off water.

As thus described, according to the present embodiment, the detecting device can detect the presence of an object with a simpler construction, without using the local oscillator 18 for performing a time extension process or the A/D converter 16, as compared with the conventional detecting device (Fig. 9).

It should be noted that, although the example was shown in the present embodiment, where sampling was performed so as to make a sampling value plus in the presence of an object, when sampling is performed so as to make a sampling value minus, that the value is not less than a threshold means that the value is a large minus value (the voltage value is not more than the threshold), namely, an electric potential difference is large.

### Embodiment 2

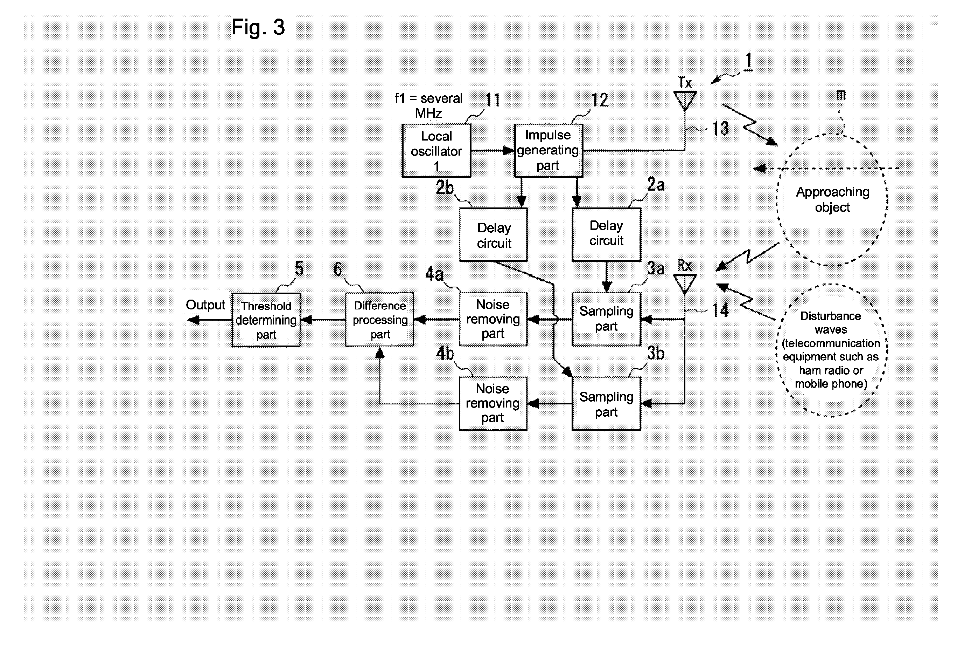

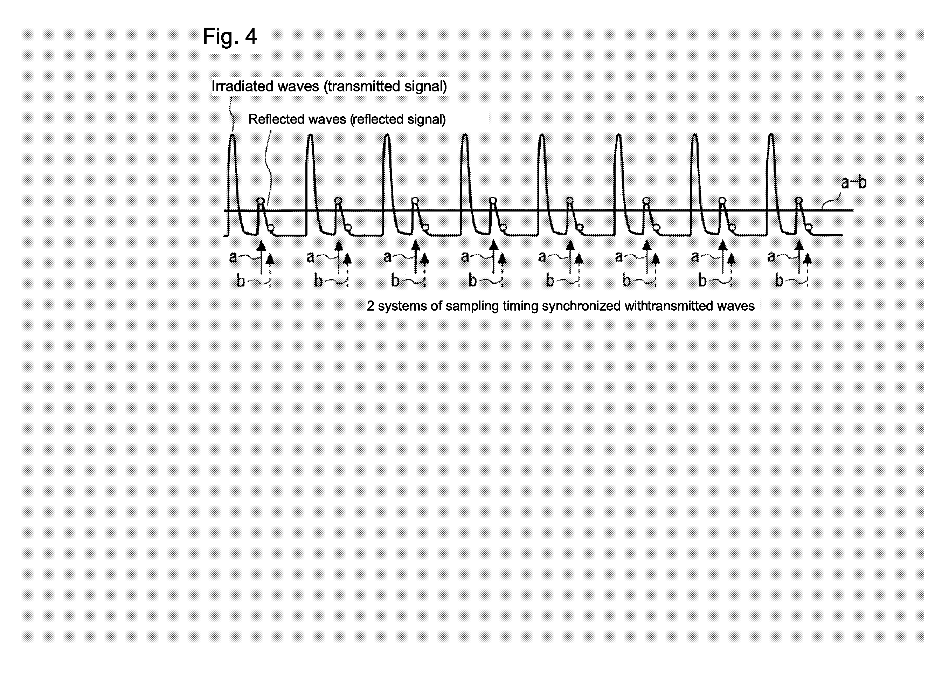

Fig. 3 is a block diagram showing a detecting device 10 as Embodiment 2 of the present invention, and Fig. 4 is an explanatory diagram of sampling in the detecting device 10.

In the present embodiment, the construction is substantially the same as that of foregoing Embodiment 1, except that a delay time is changed to perform sampling more than once per one reflected signal, and the values obtained by the sampling more than once are determined. In particular, in the detecting device 10 of the present embodiment, a delay time is changed to perform sampling N times (twice in this example) per one reflected signal, and the determining part determines whether or not a difference between a value obtained in the Nth sampling and a value obtained in the first sampling out of N is not less than a threshold.

It is to be noted that the same components are provided with the same numbers as those in forgoing Embodiment 1 in order to avoid the repetition of the same explanation.

In the figure, a delay circuit 2a, a sampling part 3a and a noise removing part 4a are components for performing sampling at a (first) timing of the arrow "a" in Fig. 4, while a delay circuit 2b, a sampling part 3b and a noise removing part 4b are components for performing sampling at a (second) timing of the arrow "b" in Fig. 4. The delay circuits 2a and 2b, the sampling parts 3a and 3b, and the noise removing parts 4a and 4b act in the same manner as the foregoing delay circuit 2, sampling part 3 and noise removing part 4, respectively.

It is to be noted that the delay time of the delay circuit 2a and the delay time of the delay circuit 2b are made slightly different. With this difference, a signal (first sampling value) sampled by the delay circuit 2a, the sampling part 3a and the noise removing part 4a at the (first) timing of the arrow "a" in Fig. 4 is inputted in a difference processing part 6, and a signal (second sampling value) sampled by the delay circuit 2b, the sampling part 3b and the noise removing part 4b at the (second) timing of the arrow "b" in Fig. 4 is inputted in the difference processing part 6. Herein, the delay times of the delay circuits 2a and 2b are set such that the sampling position at the first timing and the sampling position at the second timing are different by about a half to one pulse width, e.g. the maximum value and the minimum value of the reflected waves can be sampled.

And the difference processing part 6 obtains the difference between the first sampling value and second sampling value, and outputs the difference to the determining part 5.

The determining part 5 determines whether or not the difference obtained in the difference processing part 6 is not less than a prescribed threshold, and outputs a signal indicating the presence of an object when the obtained difference is not less than the threshold.

In the case of superposition of the reflected signal and a signal (disturbance waves) with a relatively long wavelength from telecommunication equipment, such as a ham radio or a mobile phone, or other equipment, in the detecting device having the construction of the present embodiment, more than one sampling values are influenced by the disturbance waves in about the same degree and thus concurrently increase or decrease, thereby eliminating the influence of the disturbance waves by using the difference between the more than one sampling values.

According to the present embodiment, it is therefore possible to improve the resistance to disturbance waves, in addition to the forgoing effect.

### <Alteration example>

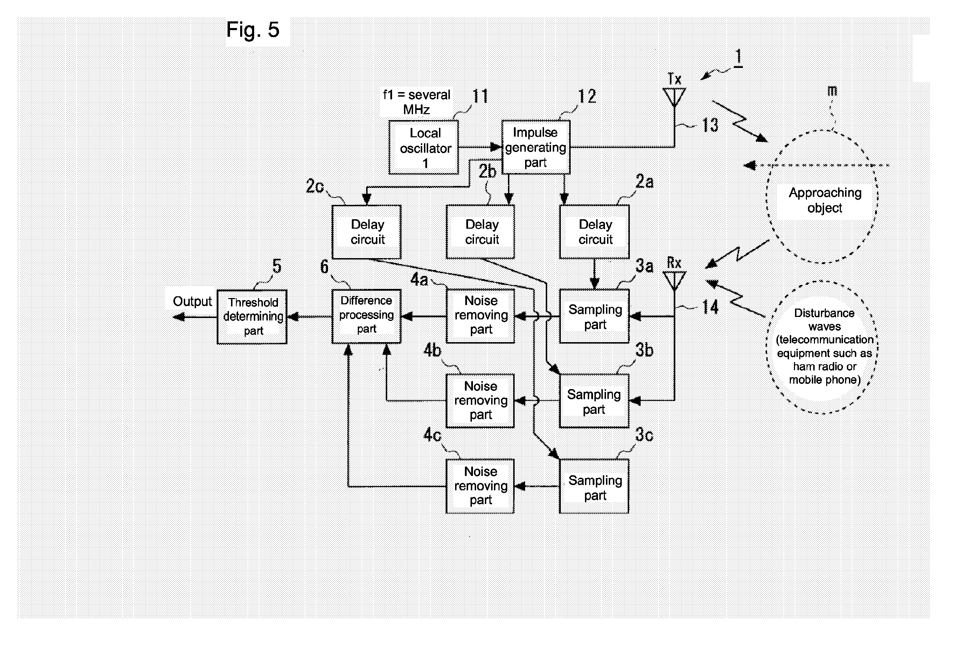

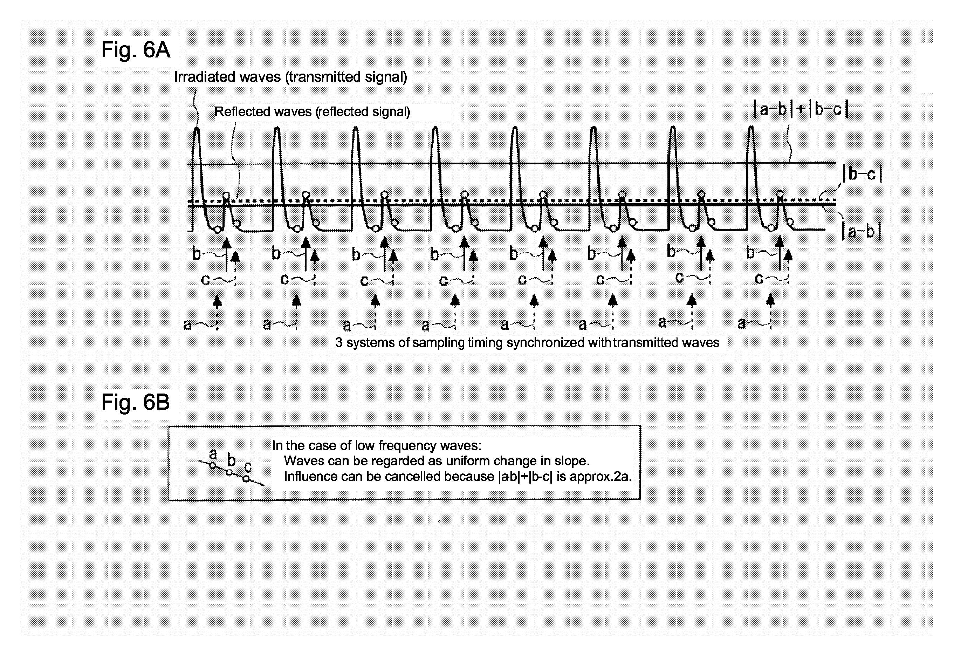

Although the example of performing sampling twice was shown in the above embodiment, this is not limiting, and N sets of the delay circuit 2 and the sampling part 3 (the noise removing part 4 is optional) may be provided to perform sampling N times. Fig. 5 is a block diagram of a detecting device 20 where three sets of the delay circuit 2, the sampling part 3 and the noise removing part 4 are provided to perform sampling three times, and Fig. 6 is an explanatory diagram of sampling in this detecting device 20.

In this case, for example, absolute values of a value obtained in the Nth sampling and a value obtained in the first sampling out of N are obtained to be summed up, the summed value is compared with a threshold, and a signal indicating the presence of an object is outputted when the summed value is not less than the threshold.

Since disturbance waves having a relatively long wavelength can be regarded as a uniform change in slope as shown in Fig. 6B, the influence of the disturbance waves can be cancelled in the system where more than one differences are summed up as in the present embodiment.

Further, in the case of obtaining more than one differences, the above summation is not limiting, and other statistical procedures, such as obtaining an average value, may be performed to compare a calculated value with a threshold so as to determine the presence or absence of a reflected signal.

### Embodiment 3

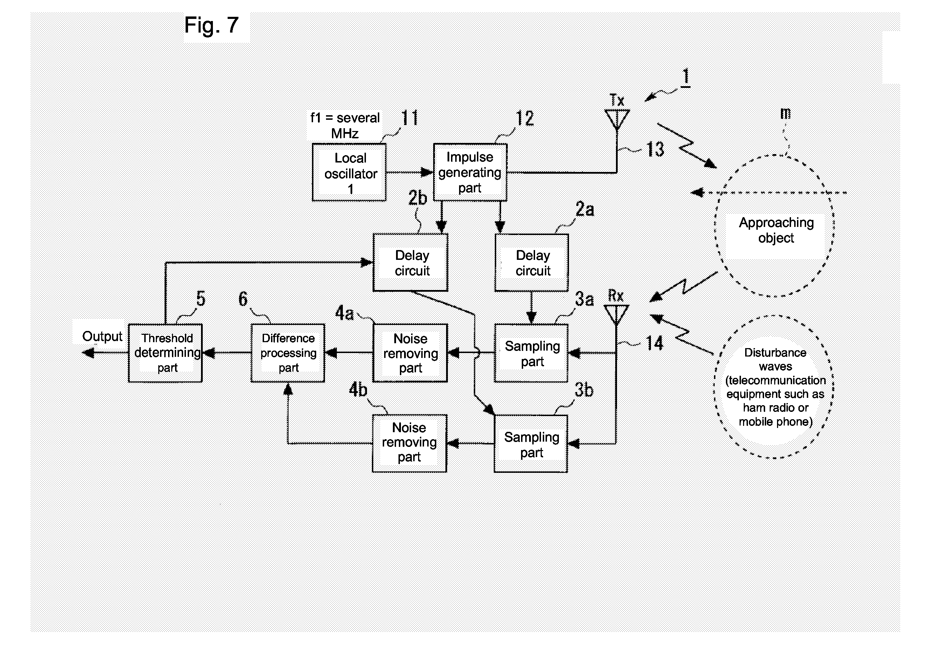

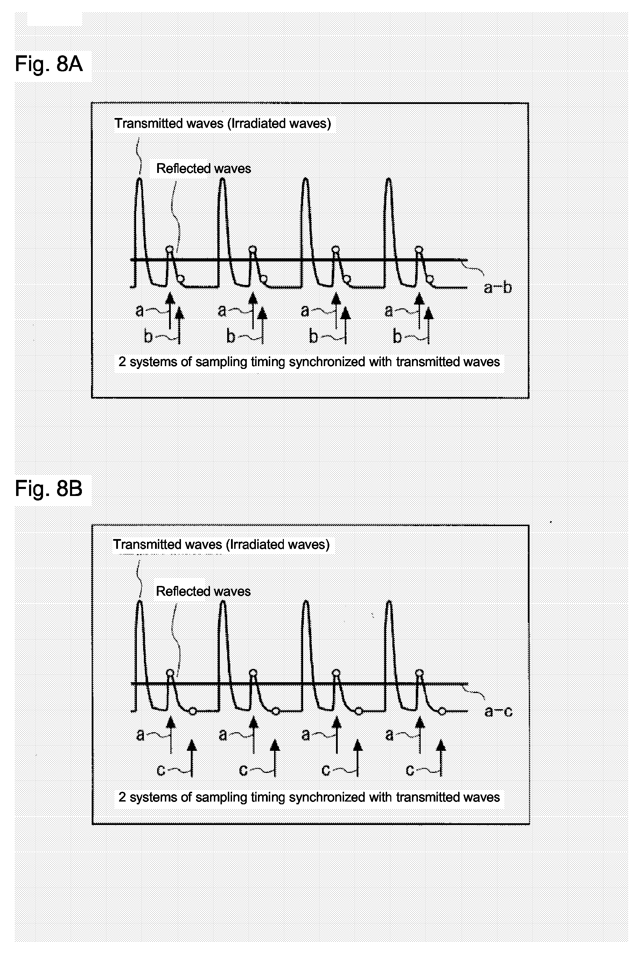

Fig. 7 is a block diagram showing a detecting device 30 as Embodiment 3 of the present invention, and Fig. 8 is an explanatory diagram of sampling in the detecting device 30. In the present embodiment, the construction is substantially the same as that of foregoing Embodiment 2, except that noise levels of more than one reflected signals are obtained and sampling timings are changed based on those noise levels. For the above reason, the same components are provided with the same numbers as those in Embodiment 2 in order to avoid the repetition of the same explanation.

In the detecting device 30 of the present embodiment, since a transmitted signal is injected at a prescribed period h1, a reflected signal is obtained at substantially the same period h1, and sampling and determination are thus performed at each period h1.

When a noise element close to the wavelength of the reflected signal is superposed on the reflected signal, the value sampled at each period h1 becomes irregular.

In the detecting device 30 of the present embodiment, each difference between values sampled at each period h1 is compared with other differences to obtain the degree of irregularity (noise level), and when this noise level is not less than a prescribed value, a signal (switch signal) requesting switching of a delay time is sent to the delay circuit 2b.

When receiving this switch signal sent on the basis of the obtained noise level, the delay circuit 2b switches a delay time.

Therefore, a sampling timing is switched when a reflected signal has a high noise level.

For example, in the case of performing sampling at the timings of the arrows "a" and "b" shown in Fig. 8A (Pattern 1), the determining part 5 compares differences received from the difference processing part 6 within a prescribed period, and sends a switch signal to the delay circuit 2b in determining that the obtained noise level is not less than a threshold, and the delay circuit 2b then switches a delay time so that sampling is performed at the timings of the arrows "a" and "c" (Pattern 2).

As thus described, according to the present embodiment, the resistance to noise close to a wavelength of a reflected signal is improved, in addition to the forgoing effect.

It is to be noted that, although in the above example, the sampling timing is switched to a different timing when the noise level becomes high, this is not limiting, and the determining part 5 may send the delay circuit 2b a switch signal requesting switching of a delay time at a prescribed period to make the samplings of the patterns 1 and 2 performed, and determines the differences in those patterns so as to send the delay circuit 2 another switch signal requesting switching the pattern to the one with a lower noise level.

### <Alteration example>

Although the sampling time to be determined is changed by switching a delay time in the above example, this is not limiting, and more than one samplings may be constantly performed to employ a sampling value or a difference with a low noise level.

For example, as shown in Fig. 5, each sampling is performed at each of the timings of the allows "a", "b" and "c" in Fig. 8 by the delay circuit 2a, the sampling part 3a and the noise removing part 4a, or the delay circuit 2b, the sampling part 3b and the noise removing part 4b, or a delay circuit 2c, a sampling part 3c and a noise removing part 4c. The difference processing part 6 then obtains a difference Δ1 between the respective values obtained in the samplings at the timings of the arrows "a" and "b" and a difference Δ2 between the respective values obtained in the samplings at the timings of the arrows "a" and "c", and outputs those differences to the determining part 5.

The determining part 5 obtains and compares noise levels of the differenceΔ1 and the difference Δ2, and employs the difference with a lower noise level. Namely, the determining part 5 outputs a signal (determination result) indicating the detection of an object at a timing when the difference with a lower noise level was received.

Even in this construction, the same effect as that of above Embodiment 3 can be obtained.

### <Others>

The present invention is not limited to the forgoing examples shown by the drawings, and a variety of alterations can naturally be made within the true spirit and scope of the invention.

For example, although the detecting device 1 comprised the impulse generating part 12 and the antenna 13 for emitting a transmitted signal in the above embodiments, the present invention is not limited to this construction, and may be constructed of the components 12, 14, 2, 3, 4 and 5 that receive a reflected signal. In this case, another device emits a transmitted signal at a prescribed period h1, and the detecting device of the present invention then receives the transmitted signal and the reflected signal, and samples the reflected signal after a prescribed delay time from the reception of the transmitted signal. In this construction, the same effect as that of the forgoing embodiments can be obtained even though another device is used as a device to inject a transmitted signal.

## Claims

1. A detecting device (1) which emits a transmitted signal of pulsed electromagnetic waves, receives a reflected signal upon reflection of said transmitted signal on an object, and detects the presence of the object on the basis of said reflected signal,
said detecting device (1) comprising: a receiving part (14) for receiving a reflected signal from an object on which a transmitted signal is incident; a sampling part (3, 3a, 3b, 3c) for sampling said reflected signal after a prescribed delay time from the emission of said transmitted signal; and a determining part (5) for comparing said sampling value with a threshold to determine the presence of the object and output the determination result.

2. The detecting device (1) according to claim 1, wherein said sampling part (3, 3a, 3b, 3c) changes a delay time to perform sampling more than once per one reflected signal, and said determining part (5) makes a determination as to the values obtained by the sampling more than once.

3. The detecting device (1) according to claim 1 or 2, wherein said sampling part (3, 3a, 3b, 3c) changes a delay time to perform sampling N times per one reflected signal, and said determining part (5) determines whether or not a difference between a value obtained in the Nth sampling and a value obtained in the first sampling out of N is not less than a threshold.

4. The detecting device (1) according to claim 1 to 3, wherein said determining part (5) compares sampling values of more than one reflected signals in the case of receiving said reflected signal more than once, to obtain noise levels and make said delay time changed on the basis of said noise levels.

5. The detecting device (1) according to claim 2 or 3, wherein said determining part (5) makes said determination as to more than one reflected signals in the case of receiving said reflected signal more than once, and compares each value obtained by sampling at each of said delay times, to obtain each noise level, and employ and output the value obtained by sampling at the delay time with the lowest noise level.
